Europäisches Patentamt

European Patent Office

Office européen des brevets

(19)

(11) **EP 1 055 870 A1**

(12) **EUROPÄISCHE PATENTANMELDUNG**

(43) Veröffentlichungstag:
29.11.2000  Patentblatt 2000/48

(51) Int. Cl.⁷: **F21V 8/00**, F21V 5/02

(21) Anmeldenummer: 99110141.1

(22) Anmeldetag: 25.05.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**Siteco Beleuchtungstechnik GmbH**
**83301 Traunreut (DE)**

(72) Erfinder:
• **Belloni, Paola**
**83278 Traunstein (DE)**

• **Leibig, Joachim**
**83374 Traunwalchen (DE)**
• **Prodell, Peter**
**83308 Trostberg (DE)**
• **Weinmann, Ansgar**
**83329 Waging (DE)**

(74) Vertreter: **Goddar, Heinz J., Dr.**
**FORRESTER & BOEHMERT**
**Franz-Joseph-Strasse 38**
**80801 München (DE)**

(54) **Innenraumleuchte mit refraktiver Blendungsbegrenzung**

(57)      Die Erfindung betrifft eine Leuchte (1) mit mindestens zwei nebeneinander angeordneten Lichtleitern (5) mit einer eine Lichtaustrittsfläche aufweisenden Unterseite, einer oder mehreren Lampen (3), wobei zumindest an einer zu der Unterseite nicht parallelen Seitenfläche jedes der Lichtleiter (5) zumindest eine Lampe (3) derart angeordnet ist, daß Licht der Lampe (3) bzw. Lampen über die besagten Seitenflächen der Lichtleiter (5) in diese eingekoppelt wird, sowie mit einer Lichtauskoppeleinrichtung (11) zum Auskoppeln von Licht aus den Lichtleitern (5) zum Austritt über die besagte Lichtaustrittsfläche, die dadurch gekennzeichnet ist, daß die Lichtauskoppeleinrichtung (11) in dem Lichtweg des aus der Lichtaustrittsfläche austretenden Lichts eine Grenzfläche zwischen zwei Medien mit unterschiedlichen Brechungsindizes aufweist, die mit einer lichtbrechenden Struktur versehen ist, die zumindest abschnittweise entsprechend einem Linienmuster (28,30) aus einer oder mehreren Linien ausgebildet ist, dessen Linie (28,30) oder einen oder mehrere längliche lichtbrechende Abschnitte (24a,24b,26a,26b) auf einander gegenüberliegenden Seiten begrenzen, deren bzw. dessen Breite in der Richtung senkrecht zu den Linien kleiner als deren Länge in Richtung der Linien ist, wobei die lichtbrechende Struktur, bezogen auf eine Fläche senkrecht zu der oder den Linien, eine Abschirmung des aus der Grenzfläche austretenden Lichts oberhalb eines Grenzwinkels bezüglich einer Normalen zu der Grenzfläche erzeugt.

FIG 1

EP 1 055 870 A1

**Beschreibung**

Die Erfindung betrifft eine Leuchte, insbesondere eine Leuchte zum Abhängen von einer Decke oder dgl., mit einem oder mehreren Lichtleitern, die eine eine Lichtaustrittsfläche aufweisende Unterseite aufweisen, einer oder mehreren Lampen, welche in einem jeweils an eine zu der Unterseite des Lichtleiters nicht parallelen Seitenfläche angrenzenden Raumbereich derart angeordnet sind, daß Licht der Lampe bzw. Lampen über diese Seitenfläche in einen Lichtleiter eingekoppelt wird, sowie mit einer refraktiven Lichtauskoppeleinrichtung zum Auskoppeln von Licht aus dem Lichtleiter zum Austritt über die besagte Lichtaustrittsfläche. Eine derartige Innenraumleuchte ist beispielsweise aus EP 0 846 915 A1 bekannt. Bei der aus der EP 0 846 915 A1 bekannten Innenraumleuchte wurden zum Auskoppeln Prismenstrukturen verwendet, wie sie beispielsweise aus US-PS 5 396 350 und US-PS 5 555 109 bekannt sind. Die dort vorgeschlagene Prismenstruktur besteht aus einem Flächenmuster von Mikroprismen, bei dem die einzelnen Mikroprismen durch ein Gitter von Zwischenräumen voneinander getrennt waren und auf allen vier Seiten begrenzte Punkte auf der Lichtaustrittsfläche bildeten. Nachteilig bei diesen Strukturen ist, daß ihre Herstellung aufwendig ist. Hinzu kommt, daß zum Auskoppeln des Lichts pro Mikroprisma nur eine relativ Meine Fläche zur Verfügung steht, und die Zwischenräume zwischen den Mikroprismen, in denen keine Auskopplung stattfindet, einen relativ großen Flächenbereich einnehmen, so daß sich nur eine geringe Auskoppeleffizienz ergibt.

Es ist eine Aufgabe der Erfindung, eine Innenraumleuchte der eingangs genannten Art zur Verfügung zu stellen, welche einen höheren Wirkungsgrad aufweist und welche kostengünstiger herzustellen ist.

Erfindungsgemäß wird diese Aufgabe gelöst durch eine Innenraumleuchte, insbesondere eine Leuchte zum Abhängen von einer Decke (Hängeleuchte), mit mindestens einem Lichtleiter, der eine eine Lichtaustrittsfläche aufweisende Unterseite besitzt, einer oder mehreren Lampen, welche in einem an eine zu der Unterseite nicht parallelen Seitenfläche des Lichtleiters angrenzenden Raumbereich derart angeordnet sind, daß Licht der Lampe bzw. Lampen über diese Seitenflächen in den Lichtleiter eingekoppelt wird, sowie mit einer refraktiven Lichtauskoppeleinrichtung zum Auskoppeln von Licht aus dem Lichtleiter zum Austritt über die besagte Lichtaustrittsfläche, welche dadurch gekennzeichnet ist, daß die Lichtauskoppeleinrichtung eine Grenzfläche zwischen zwei Medien mit unterschiedlichen Brechungsindizes aufweist, die mit einer lichtbrechenden Struktur versehen ist, die entsprechend einem vorzugsweise kreuzungsfreien Linienmuster ausgebildet ist, dessen Linie oder Linien einen oder mehrere längliche lichtbrechende Abschnitte auf einander gegenüberliegenden Seiten begrenzen, derart, daß sich in jedem Schnitt entlang einer (nicht notwendig ebenen) Fläche, die senkrecht auf der oder den Linien des Linienmusters steht, mehrere Schnittpunkte der Fläche mit der oder den Linien ergeben, wobei jeweils zwischen zwei Schnittpunkten einer der besagten Abschnitte liegt, wobei die Breite der lichtbrechenden Abschnitte in der Richtung senkrecht zu den Linien kleiner als deren Länge in Richtung der Linien ist und wobei die lichtbrechende Struktur, bezogen auf eine Fläche senkrecht zu der oder den Linien eine Abschirmung des aus der Grenzfläche austretenden Lichts oberhalb eines Grenzwinkels bezüglich einer Normalen zu der Grenzfläche erzeugt. Vorzugsweise wird dabei in den Flächen parallel zu den Linien im wesentlichen keine Abschirmung oder nur eine Abschirmung bei wesentlich größeren Winkeln erzeugt, so daß die besagte lichtbrechende Struktur im wesentlichen eine Abschirmung des Lichts der Leuchte in einer Richtung bewirkt. Die Abschirmung bewirkt, daß oberhalb des Grenzwinkels die Leuchtdichte unter einen vorgegebenen Grenzwert abfällt, nach der derzeit geltenden deutschen Norm 200 cd/m$^2$. Eine geplante europäische Norm sieht unterschiedliche Grade der Abschirmung vor, die durch Leuchtdichtewerte von 200 cd/m$^2$, 500 cd/m$^2$ und 1000 cd/m$^2$ definiert sind. Durch die Abschirmung wird eine Blendungsbegrenzung erreicht, wie sie insbesondere in den genannten Vorschriften für Bildschirmarbeitsplätze gefordert wird.

Erfindungsgemäß sind die lichtbrechenden Abschnitte, anders als bei den bislang, z. B. gemäß der EP 0 846 915 A1 bekannten Prismen, länglich, d. h. ihre Länge ist deutlich größer als ihre Breite, z. B. mehr als das Dreifache, vorzugsweise mehr als das Zehnfache. Derartige längliche, wellen- oder rippenförmige Strukturen lassen sich wesentlich einfacher herstellen als die bislang verwendeten pyramidenförmigen Strukturen. Sie haben weiterhin den Vorteil, daß die lichtbrechenden Abschnitte einen wesentlich größeren Anteil an der Grenzfläche haben, so daß die Auskoppeleffizienz verbessert wird. Insbesondere kann die lichtbrechende Struktur eine Struktur von lichtbrechenden Abschnitten sein, die entsprechend einem Muster von sich nicht kreuzenden, vorzugsweise parallelen Linien angeordnet sind, welche die lichtbrechenden Abschnitte auf einander gegenüberliegenden Seiten begrenzen. Die Linien, welche die Struktur definieren, sind vorzugsweise parallele gerade Linien. Grundsätzlich sind jedoch auch andere Strukturen denkbar, z.B. eine Struktur, bei der Linien in Form von konzentrischen Kreisen ausgebildet sind oder eine Struktur mit einer einzigen eine Fläche ausfüllenden Linie, z. B. eine Spiralstruktur mit einem spiralförmigen lichtbrechenden Abschnitt.

Insbesondere wird erfindungsgemäß eine Innenraumleuchte, insbesondere eine Hängeleuchte, zur Verfügung gestellt, die mindestens zwei Lichtleiter mit einer eine Lichtaustrittsfläche aufweisenden Unterseite und einer oder mehreren Lampen, wobei zumindest an einer zu der Unterseite nicht parallelen Seitenfläche jedes der Lichtleiter zumindest eine Lampe derart angeordnet ist daß Licht der Lampe bzw. Lampen über die besagten Seitenflächen der Lichtleiter in diese eingekoppelt wird. Gemäß einer Ausführungsform der Erfindung sind eine oder mehrere Lampen in einem jeweils an eine zu der Unterseite nicht parallele Seitenfläche der beiden Lichtleiter angrenzenden Raumbereich zwischen den beiden Lichtleitern derart angeordnet, daß Licht der Lampe bzw. Lampen in die beiden Lichtleiter eingekoppelt wird.

Gemäß einer bevorzugten Ausführungsform ist vorgesehen, daß die Lichtauskoppeleinrichtung an einer zweiten Grenzfläche zwischen zwei Medien mit unterschiedlichem Brechungsindizes, die in dem Lichtweg von der ersten Grenzfläche zu der besagten Lichtaustrittsfläche liegt, eine zweite lichtbrechende Struktur aufweist, die entsprechend einem Linienmuster, z. B. aus sich nicht kreuzenden, vorzugsweise parallelen Linien angeordnet sind, dessen Linie oder Linien einen oder mehrere längliche lichtbrechende Abschnitte begrenzen, derart, daß sich in jedem Schnitt entlang einer Fläche, die senkrecht auf der oder den Linien des Linienmusters steht, mehrere Schnittpunkte der Fläche mit der oder den Linien ergeben, wobei jeweils zwischen zwei dieser Schnittpunkte einer der besagten Abschnitte liegt, wobei die Breite der lichtbrechenden Abschnitte in der Richtung senkrecht zu den Linien kleiner als deren Länge in Richtung der Linien ist und wobei die zweite Struktur, bezogen auf eine Fläche senkrecht zu der oder den Linien, eine Abschirmung des aus der zweiten Grenzfläche austretenden Lichts oberhalb eines Grenzwinkels bezüglich einer Normalen zu der zweiten Grenzfläche erzeugt und in der Richtung parallel zu den Linien im wesentlichen keine Abschirmung oder nur eine Abschirmung in wesentlich größeren Winkeln erfolgt, wobei die Linie oder Linien der zweiten Struktur in einer Projektion auf die Lichtaustrittsfläche die Linie oder Linien der ersten Struktur schneiden, so daß sich in der Projektion ein netzförmiges Muster ergibt, derart, daß das aus der Lichtaustrittsfläche der Leuchte austretende Licht zumindest in zwei nicht parallelen Ebenen senkrecht zu der Lichtaustrittsfläche jeweils oberhalb eines Grenzwinkels bezüglich einer Normalen zu der Lichtaustrittsfläche, der für die beiden Ebenen verschieden sein kann, abgeschirmt wird. Vorzugsweise stehen die Linien der ersten und zweiten Struktur in der Projektion senkrecht aufeinander. Die Linien der ersten und/oder zweiten Struktur müssen dabei nicht notwendigerweise gerade sein. Denkbar ist z. B., daß die erste Struktur von konzentrischen Kreisen und die zweite Struktur eine Struktur von Linien ist, die in der Projektion sich im Mittelpunkt der Kreise der anderen Struktur schneiden. Ebenso ist denkbar, daß die erste und zweite Struktur zwei gegenläufige Spiralen bilden.

Vorzugsweise können der oder die lichtlenkenden Abschnitte zwischen linienförmigen Vertiefungen der ersten und/oder zweiten Struktur ausgebildet und in Richtung der Linien im wesentlichen gleichförmig sein und insbesondere Prismen sein. Denkbar ist auch eine Struktur mit einem linsenförmigen Querschnitt senkrecht zu der oder den Linien.

Gemäß einer bevorzugten Ausführungsform ist die erste und/oder zweite Struktur entsprechend einem Muster von geraden parallelen kreuzungsfreien Linien aufgebaut, zwischen denen sich Prismen als lichtbrechende Abschnitte befinden, deren Querschnittsprofil im wesentlichen translationsinvariant bezüglich der Richtung der Linien ist.

Gemäß einer besonderen Ausführungsform ist die erste und/oder zweite Grenzfläche eine Grenzfläche zwischen Luft und einem optisch dichteren Medium, wobei die Prismen im Querschnitt im wesentlichen symmetrisch sind und der Prismenwinkel w die folgenden Relationen erfüllt:

$$w/2 \leq C$$

$$w \geq 2 \, (2 \arcsin(1/n) + 90)/3$$

$$\tan(w/2) \leq (n \sin(\arcsin(1/n) - 3\,w/2) + \cos(w/2)) / (n \cos(\arcsin(1/n) - 3\,w/2) - \sin(w/2)),$$

wobei n der Brechungsindex des zweiten Mediums an der Grenzfläche und C der Abschirmwinkel der Lichtstärkeverteilung an der Grenzfläche ist.

Der Querschnitt der Prismen hat gemäß einer besonderen Ausführungsform die Form eines Polygonzugs. Vorzugsweise haben die Prismen einen dreieckigen Querschnitt. Sie können jedoch auch gekrümmte Seitenwände und/oder eine flache Stirnfläche anstelle einer scharfen Kante aufweisen. Wesentlich ist, daß sie die vorangehend erwähnte Begrenzung des Abstrahlwinkels in der Richtung quer zu den Linien aufgrund von Lichtbrechung bewirken.

Erfindungsgemäß können die erste und zweite Struktur an zwei einander gegenüberliegenden Seiten einer lichtbrechenden Platte ausgebildet sein.

Gemäß einer bevorzugten Ausführungsform der Erfindung ist vorgesehen, daß die Lichtauskoppeleinrichtung zwei einander gegenüberstehende plattenförmige Elemente aufweist, deren Grundflächen parallel zueinander angeordnet sind, wobei die erste Struktur in einer Grundfläche eines ersten plattenförmigen Elementes und die zweite Struktur in einer Grundfläche des zweiten plattenförmigen Elementes ausgebildet ist. Grundsätzlich können auch mehr als zwei geschichtete Platten mit einer lichtbrechenden Struktur vorgesehen sein.

Die beiden Grundflächen mit der ersten bzw. zweiten Struktur können direkt aneinander angrenzen. In diesem Fall bilden die Platten eine Einheit mit den beiden strukturierten Grundflächen in der Mitte und vorzugsweise unstrukturierten, also im wesentlichen glatten Grundflächen auf der Außenseite. Sie können auch jeweils nach außen weisen, so daß die Platten mit den unstrukturierten Flächen aneinander angrenzen. Schließlich ist es auch möglich, daß die beiden strukturierten Grenzflächen beide in dieselbe Richtung weisen, entweder in die Richtung des Lichtaustritts aus der Lichtauskoppeleinrichtung oder die entgegengesetzte Richtung.

Die Erfindung kann einen einer oder mehreren Lampen zugeordneten Reflektor vorsehen, welcher Licht der Lampe bzw. der Lampen teilweise zu der Schmalseite eines Lichtleiters hin zum Einkoppeln in den Lichtleiter reflektiert und teilweise an dem Lichtleiter vorbei nach oben zur Erzeugung eines indirekten Lichtanteils der Leuchte abgibt. Dies entspricht im wesentlichen der in der EP 0 846 915 A1 vorgeschlagenen Technik zur Erzeugung eines indirekten Lichtanteils.

Der oder die Lichtleiter können massive Lichtleiter sein. Bevorzugt ist jedoch, daß zumindest einer der Lichtleiter ein Hohllichtleiter ist, der durch ein Gehäuse mit einem Hohlraum festgelegt ist, dessen Innenwände zumindest teilweise reflektierend sind, der an einer Schmalseite zum Einkoppeln von Licht von einer oder mehreren der Lampen eingerichtet ist, an einer Seite zumindest teilweise durch die Lichtauskoppeleinrichtung begrenzt ist und eine der Lichtauskoppeleinrichtung gegenüberliegende Dachfläche aufweist, die nach innen, also zu dem Hohlraum hin, zumindest teilweise reflektierend ist.

Der Hohlraum kann zu der Lampe hin geschlossen sein und eine Lichteinkoppeleinrichtung zum Einkoppeln von Licht von der Lampe in den Hohlraum aufweisen, im einfachsten Fall eine transparente Wand.

Gemäß einer bevorzugten Ausführungsform ist jedoch vorgesehen, daß der Hohllichtleiter zu der oder den Lampen hin offen ist, so daß Licht von den Lampen direkt, also ohne Lichtbrechung, in den Hohlraum gelangen kann.

Die Verwendung eines Hohllichtleiters hat zahlreiche Vorteile. Insbesondere lassen sich die Reflexionseigenschaften in dem Lichtleiter wesentlich einfacher und besser gestalten als bei einem massiven Lichtleiter. Durch eine Verspiegelung der Dachfläche oder durch eine diffus reflektierende Dachfläche können der Reflexionsgrad erhöht und/oder Mehrfachreflexionen vermieden werden. Während bei einem massiven Lichtleiter das Aufbringen einer unter lichttechnischen Gesichtspunkten befriedigenden lichtbrechenden Struktur zum Auskoppeln aufwendig ist, läßt sich dies bei einem Hohlichtleiter in einfacher Weise dadurch realisieren, daß als Boden ein oder mehrere entsprechend strukturierte Platten eingesetzt werden. Obwohl derzeit zwei derartige Platten bevorzugt sind, können durchaus auch mehr derartige Platten mit unterschiedlichen Strukturen vorgesehen werden, um die Lichtabstrahlcharakteristik zu beeinflussen, insbesondere um den Abstrahlwinkel in verschiedenen Ebenen zu begrenzen. Wenn eine Abschirmung nur in eine Richtung beabsichtigt ist, kann auch nur eine einzige Platte mit einer entsprechenden Strukturierung verwendet werden.

Die Hohllichtleitertechnik eröffnet jedoch auch eine alternative Möglichkeit, um einen indirekten Lichtanteil aus dem Lichtleiter auszukoppeln.

Erfindungsgemäß ist hierfür vorgesehen, daß die Dachfläche teilweise Licht aus dem Hohlraum in die zu der Lichtaustrittsfläche entgegengesetzte Richtung zur Abgabe eines indirekten Lichtanteils auskoppelt.

Hierfür kann die Dachfläche teilweise transparent und teilweise reflektierend ausgebildet sein. Um die indirekte Lichtabgabe zu kontrollieren und insbesondere einen ausreichenden direkten Lichtanteil zu erhalten, kann auch vorgesehen sein, daß die Dachfläche abschnittsweise ganz oder teilweise transparent und abschnittsweise im wesentlichen vollständig reflektierend ist.

Eine teilweise Transparenz kann beispielsweise dadurch realisiert werden, daß die Dachfläche ganz oder teilweise als halbdurchlässiger Spiegel ausgebildet ist.

Ebenfalls kann vorgesehen sein, daß die Dachfläche eine lichtbrechende Struktur zum Auskoppeln von Licht in die der Lichtaustrittsfläche entgegengesetzte Richtung aufweist. Diese lichtbrechende Struktur kann eine Mikroprismenstruktur sein, wie sie aus der US-PS 5 396 350 oder der US 5 555 109 bekannt ist, oder auch eine Struktur, wie sie zum Lichtauskoppeln an der Lichtaustrittsfläche an der Unterseite des Lichtleiters vorgesehen ist.

Eine weitere Möglichkeit zur Lichtauskoppelung an der Dachfläche für eine diffuse Beleuchtung, beispielsweise einer Decke, kann auch darin bestehen, daß die Dachfläche durch eine entsprechende Strukturierung, z.B. Aufrauhen oder dgl., transparent streuend ausgebildet wird.

Alternative oder ergänzend kann vorgesehen sein, daß die Dachfläche teilweise aus einem klaren Material mit einem hohen Transmissionsgrad besteht und/oder teilweise aus einem vollständig oder überwiegend reflektierenden Material besteht.

Insbesondere kann vorgesehen sein, daß in der Dachfläche im wesentlichen ausschließlich transmittierende und im wesentlichen ausschließlich reflektierende Abschnitte vorgesehen sind.

Es hat sich gezeigt, daß die Lichtstärke für kleine Winkel zur Senkrechten vergrößert wird, wenn die Dachfläche ganz oder abschnittsweise diffus reflektierend ausgebildet ist.

Bei Anwendung der erfindungsgemäßen Lehre hat sich gezeigt, daß eine größere Lichtstärke bei kleinen Winkeln erreicht werden kann, wenn die Höhe des Hohlraums in einem Schnitt senkrecht zu der Lampenachse sich zumindest in einem Teilabschnitt in der Richtung weg von einer Lampe bzw. den Lampen verringert.

Insbesondere bei Leuchten mit einseitiger Lichteinstrahlung ist es dabei vorteilhaft, wenn die Höhe des Hohlraums, ausgehend von der der Lampe zugewandten Schmalseite, sich in der Richtung von dieser Schmalseite weg zu einer gegenüberliegenden Schmalseite hin monoton verringert, wobei „monoton verringern" in dem Sinn zu verstehen ist, daß die Höhe sich zumindest abschnittsweise verringert und in den übrigen Abschnitten zumindest konstant bleibt. Bei einer Leuchte mit einer einseitigen Lichteinstrahlung ist es für eine bessere Lichtausnutzung vorteilhaft, wenn die gegenüberliegende Schmalseite reflektierend ausgebildet ist.

Insbesondere bei Leuchten, bei denen an einander gegenüberliegenden Schmalseiten Lampen angeordnet sind, die Licht in den Hohlleiter einstrahlen, ist es vorteilhaft, wenn die Höhe des Hohlraums in einem Schnitt senkrecht zu der Lampenachse, ausgehend von einer Schmalseite, in Richtung zu der gegenüberliegenden Schmalseite hin in einem ersten Teilabschnitt abnimmt und danach in einem zweiten Teilabschnitt zunimmt.

Bevorzugterweise hat dabei die Dachfläche eine im wesentlichen konkave Struktur, d.h. sie bildet in einem Teilabschnitt eine Vertiefung zwischen den beiden Schmalseiten. Grundsätzlich kann jedoch auch — alternativ oder ergänzend — die Lichtaustrittsfläche im wesentlichen konkav ausgebildet sein, was aus Designgründen vorteilhaft sein kann.

Eine Reihe von Gestaltungsformen haben sich hinsichtlich einer Optimierung der Lichtstärkeverteilungskurve als vorteilhaft herausgestellt. Gemäß einer ersten Klasse von Gestaltungsformen weist der Hohlraum einen Bereich mit im wesentlichen konstanter minimaler Höhe zwischen den beiden Schmalseiten auf, der vorzugsweise in der Mitte zwischen den beiden Schmalseiten liegt. Es hat sich herausgestellt, daß mit derartigen Hohlraumgestaltungen der Leuchtenbetriebswirkungsgrad deutlich erhöhen läßt.

Dabei kann insbesondere vorgesehen sein, die Dachfläche und/oder die ihr gegenüberliegende Fläche des Hohlraums im Querschnitt die Form eines Polygonzugs aufweist, wobei dieser Polygonzug vorzugsweise, jedoch nicht notwendig einen Bereich mit im wesentlichen konstanter minimaler Höhe zwischen den beiden Schmalseiten, wie vorangehend erwähnt, aufweisen kann. Insbesondere kann vorgesehen sein, daß die Dachfläche aus zwei schräg in den Hohlraum des Hohllichtleiters abfallenden Schrägflächen besteht, die unmittelbar aneinander angrenzen.

Gemäß einer weiteren Ausführungsform kann vorgesehen sein, daß die Dachfläche und/oder die ihr gegenüberliegende Fläche im Querschnitt konvex gekrümmte Teilabschnitte aufweist, in denen sich die Höhe in der Richtung von den Schmalseiten zu der Mitte des Hohlraums hin verringert und die vorzugsweise durch einen Abschnitt mit konstanter Höhe oder einen anderen Abschnitt getrennt sind. Die konvexen Teilabschnitte können jedoch auch an ihrem tiefsten Punkt aneinander anschließen, so daß sich eine schwingenförmige Struktur oder Teilstruktur ergibt.

Weiterhin kann vorgesehen sein, daß die Dachfläche und/oder die ihr gegenüberliegende Fläche in Querschnitt ganz oder teilweise konkav gekrümmt ausgebildet ist, wobei vorzugsweise die Dachfläche einen nach innen gewölbten Bogen zwischen den beiden Schmalseiten des Hohllichtleiters bildet. Es kann auch vorgesehen sein, daß die Dachfläche und/oder die ihr gegenüberliegende Fläche, ausgehend von den beiden Schmalseiten des Hohllichtleiters, jeweils einen konkav gekrümmten Teilabschnitt aufweisen, wobei diese beiden konkav gekrümmten Teilabschnitte an ihrem von der jeweiligen Schmalseite abgewandten Ende durch einen vorzugsweise geraden Zwischenabschnitt verbunden sind.

Gemäß einer besonderen Ausführungsform der Leuchte ist vorgesehen, daß in der Nähe von zwei einander gegenüberliegenden Schmalseiten jeweils eine oder mehrere Lampen angeordnet sind, welche über diese Schmalseite Licht in den Hohlraum einkoppeln, wobei vorzugsweise die Höhe des Hohlraums in einem Bereich zwischen den Lampen soweit verringert ist, daß eine Direkteinstrahlung einer Lampe auf den Lichteinkoppelbereich einer gegenüberliegenden Lampe verhindert oder zumindest reduziert wird.

Weitere Merkmale und Vorteile der Erfindung ergeben sich aus der nachfolgenden Beschreibung von Ausführungsbeispielen der Erfindung anhand der beigefügten Zeichnungen.

Fig. 1            zeigt schematisch ein erstes Ausführungsbeispiel einer erfindungsgemäßen Innenraumleuchte,

Fig. 2            zeigt einen Querschnitt der Leuchte gemäß Fig. 1 senkrecht zu der Lampenachse und illustriert den Strahlengang in dem Hohllichtleiter,

Fig. 3            zeigt eine perspektivische Ansicht der beiden rillenförmig strukturierten Prismenplatten zum Auskoppeln von Licht aus dem Lichtleiter,

Fig. 4            ist eine Schnittansicht der Prismenplatten gemäß Fig. 3 entlang der Linie IV — IV,

Fig. 5            ist eine Schnittansicht der beiden Prismenplatten gemäß Fig. 3 entlang der Linie V — V,

Fig. 6            zeigt schematisch ein zweites Ausführungsbeispiel der erfindungsgemäßen Leuchte,

Fig. 7            zeigt schematisch ein erstes vorteilhaftes Querschnittsprofil eines Hohllichtleiters bei einer erfindungsgemäßen Leuchte,

Fig. 8       zeigt schematisch ein zweites vorteilhaftes Querschnittsprofil eines Hohllichtleiters bei einer erfindungsgemäßen Leuchte,

Fig. 9       zeigt schematisch ein drittes vorteilhaftes Querschnittsprofil eines Hohllichtleiters bei einer erfindungsgemäßen Leuchte,

Fig. 10      zeigt schematisch ein viertes vorteilhaftes Querschnittsprofil eines Hohllichtleiters bei einer erfindungsgemäßen Leuchte,

Fig. 11      zeigt schematisch ein fünftes vorteilhaftes Querschnittsprofil eines Hohllichtleiters bei einer erfindungsgemäßen Leuchte,

Fig. 12      zeigt schematisch ein sechstes vorteilhaftes Querschnittsprofil eines Hohllichtleiters bei einer erfindungsgemäßen Leuchte,

Fig. 13      zeigt schematisch eine weitere Ausführungsform einer erfindungsgemäßen Leuchte,

Fig. 14      zeigt schematisch einen Querschnitt eines Hohllichtleiters mit einer refraktiven Lichtauskoppeleinrichtung für den Indirektanteil.

Fig. 15 — Fig. 19      zeigen schematisch Beispiele weiterer Ausführungsformen der erfindungsgemäßen Leuchte.

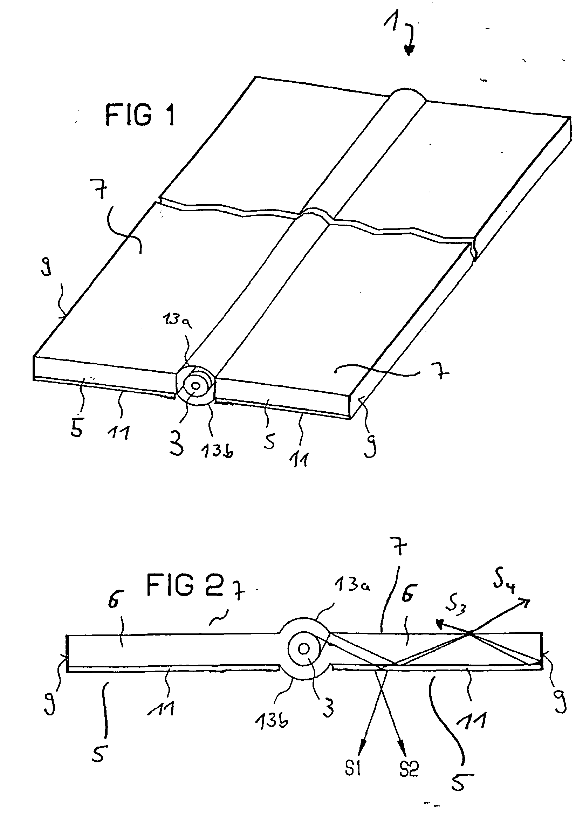

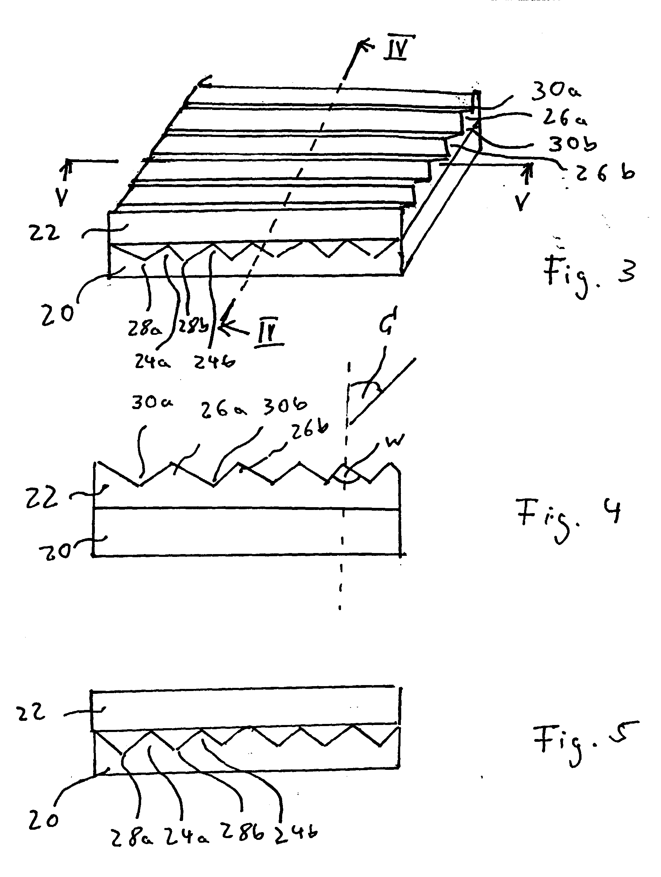

Fig. 1 zeigt ein erstes Ausführungsbeispiel einer erfindungsgemäßen Leuchte, die insbesondere als Hängeleuchte ausgebildet sein kann und allgemein mit 1 bezeichnet ist. Bei dieser Leuchte 1 ist eine Leuchtstofflampe 3 in der Mitte zwischen zwei Hohllichtleitern 5 mit einem Hohlraum 6 angeordnet, der, wie aus Fig. 2 ersichtlich, auf der der Lampe 3 zugewandten Schmalseite offen ist. Der Hohlraum 6 wird oben durch eine teilweise reflektierende Dachfläche 7, seitlich durch reflektierende Seitenwände 9 und unten durch eine Lichtauskoppeleinrichtung 11 begrenzt, welche nachfolgend näher beschriebene lichtbrechende Strukturen zum Auskoppeln von Licht aus dem Hohllichtleiter 5 aufweist. Die Lampe 3 ist oben und unten von einem Reflektor 13a bzw. 13b umgeben, welcher vorzugsweise so ausgestaltet ist, daß das Licht der Lampe 3 nahezu vollständig in die beiden Hohllichtleiter 5 eingekoppelt wird.

Die Lichtauskoppeleinrichtung 11 ist in den Figuren 3 bis 5 perspektivisch bzw. im Schnitt näher dargestellt. Sie besteht aus zwei Platten 20 und 22, die jeweils an der der Seite des Lichteinfalls gegenüberliegenden Seite eine Prismenstruktur mit satteldachförmigen Prismen 24a, 24b ... bzw. 26a, 26b, ... (nachfolgend kollektiv mit 24 bzw. 26 bezeichnet) versehen sind, die durch gerade rinnenförmige Vertiefungen 28a, 28b ... bzw. 30a, 30b, ... (nachfolgend kollektiv mit 28 bzw. 30 bezeichnet) voneinander getrennt sind. Dabei stehen die Kantenlinien der Prismen 24 bzw. die Vertiefungen 28 senkrecht zu den Kantenlinien der Prismen 26 bzw. den Vertiefungen 30. Der besseren Anschaulichkeit halber sind die Prismenplatten in Fig. 3 bis 5 so dargestellt, daß die Prismen, die im Einsatz nach außen, also zur Lichtaustrittsseite hin liegen, nach oben gerichtet dargestellt ist. Die Breite der Prismen beträgt gemäß den derzeit bevorzugten Ausführungsformen ca 0,01 mm bis 40 mm, bevorzugt 0,05 mm bis 10 mm und besonders bevorzugt 0,1 mm bis 5 mm. Die Platten 20 und 22 bestehen aus einem leicht bearbeitbaren lichtdurchlässigem Material, z.B. Acrylglas oder Polycarbonat.

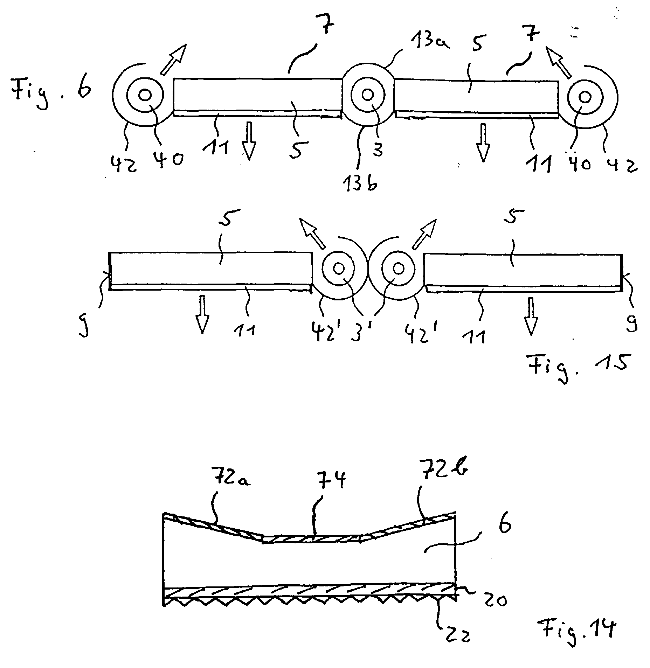

Die Prismenstrukturen der Platten 20 bzw. 22 legen jeweils den Abschirmwinkel der Leuchte in der Ebene senkrecht zu den Kantenlinien der Prismen 24 bzw. 26 bzw. den Vertiefungen dazwischen fest. Dabei bestehen zwischen dem Prismenwinkel w und dem Abschirmwinkel C in der Ebene senkrecht zu den Kantenlinien der Mikroprismen (vgl. Fig. 4), wenn der Hohlraum 6 mit Luft gefüllt ist, die folgenden Relationen:

$$w/2 \leq C$$

$$w \geq 2 \, (2 \arcsin(1/n) + 90)/3$$

$$\tan(w/2) \leq (n \sin(\arcsin(1/n) - 3\,w/2) + \cos(w/2)) / (n \cos(\arcsin(1/n) - 3\,w/2) - \sin(w/2)),$$

wobei n der Brechungsindex der Platte 20 bzw. 22 ist. Aufgrund der senkrecht zueinanderstehenden Prismenstrukturen ergibt sich eine einwandfreie Entblendung sowohl in Längs- als auch in Querrichtung, wobei der Abschirmwinkel C für die beiden Richtungen durch eine geeignete Wahl des Prismenwinkels w unterschiedlich für die beiden Prismenstrukturen 24 und 26 gewählt werden kann.

Anstelle von orthogonalen rillenförmigen Prismenstrukturen sind auch andere linienförmige Prismenstrukturen mit orthogonal aufeinanderstehenden Linien denkbar, z.B. kreisförmige Rillen bzw. Prismen in einer Struktur und sternförmig von dem Kreiszentrum ausgehenden Rillen mit dazwischenliegenden Prismen in der anderen Struktur, die auf allen Kreisrillen senkrecht stehen. Die Orientierung der Prismenstrukturen 24 und 26 kann von der in den Figuren 3 bis 5 dargestellten Orientierung abweichen. Beide Prismenstrukturen können beispielsweise in die gleiche Richtung weisen, so daß eine der Prismenstrukturen an der ebenen Fläche der anderen Platte aufsteht oder die Prismenstrukturen können auch direkt aneinander angrenzen.

Die Wirkungsweise des Hohllichtleiters ist in Fig. 2 anhand beispielhafter Strahlengänge illustriert. Für einen Teil der Lichtstrahlen (vgl. Lichtstrahl S1) wird das direkt auf die Lichtauskoppeleinrichtung 11 einfallende Licht über die Prismen 24 und 26 direkt ausgekoppelt. Für einen weiteren Teil des Lichts (vgl. Strahl S2) wird das Licht an der Prismenstruktur in den Hohlraum 6 hinein zurückreflektiert, anschließend an der Dachfläche 7 und der Seitenwand 9 reflektiert und gelangt dann wieder mit einem geeigneten Einfallswinkel zu der Lichtauskoppeleinrichtung 11, wo es durch die Prismenstrukturen 24 und 26 ausgekoppelt wird. Die Dachfläche 7 ist nicht vollständig reflektierend ausgebildet, sondern vielmehr teilweise transparent, so daß ein Teil des in dem Hohllichtleiter 5 umlaufenden Lichts an der Dachfläche ausgekoppelt wird, was durch Teillichtstrahlen S3 und S4 angedeutet ist. Die Dachfläche 7 kann diffus streuend ausgebildet sein, sie kann aber auch eine Lichtauskoppeleinrichtung ähnlich der Lichtauskoppeleinrichtung 11 aufweisen. Es kann auch vorgesehen sein, daß sie abschnittsweise vollständig reflektierend und abschnittsweise teilweise oder vollständig transparent ist. Sie kann insbesondere auch ganz oder teilweise hochglänzend ausgebildet sein. Die geeignete Wahl der Dachfläche 7 hängt davon ab, welche Lichtstärkeverteilung man für den Indirektanteil wünscht. Für eine möglichst wenig variierende Lichtstärkeverteilung ist eine diffus oder teilweise diffus streuende Dachfläche sinnvoll, während dann, wenn eine bestimmte Vorzugsrichtung für den Indirektanteil gewünscht ist, eine lichtbrechende lichtlenkende Struktur, beispielsweise eine Prismenstruktur, vorteilhaft ist, da sich dadurch die Lichtstärkeverteilungskurve gezielt beeinflussen läßt.

Eine weitere Ausführungsform der Erfindung mit mehreren Lampen ist schematisch in Fig. 6 dargestellt. Dort ist an den beiden äußeren Schmalseiten der Lichtleiter 5 jeweils eine weitere Leuchtstofflampe 40 angeordnet, welche von außen Licht in den Hohllichtleiter 5 einkoppelt. Wie vorangehend mit Bezug auf Fig. 2 beschrieben, koppeln die beiden Lichtauskoppeleinrichtungen 11 einen Teil des Lichts der Lampen 3 und 40 direkt aus und reflektieren einen weiteren Teil des Lichts zu der Dachfläche 7, wo er wiederum teilweise als indirekter Lichtanteil nach oben austritt und teilweise in den Hohlraum 6 zurückreflektiert wird. Die Lampen 40 sind von Reflektoren 42 zum Einkoppeln von Licht in die Hohllichtleiter 5 umgeben. Gleichzeitig sind diese Reflektoren 42 jedoch auch so ausgebildet, daß ein Teil des Lichts der Lampen 40 nach oben schräg an dem Hohllichtleiter 5 vorbei als Indirektanteil abgestrahlt wird. Dies kann durch eine geeignete reflektierende Ausgestaltung, durch eine teilweise Ausbildung der Reflektoren 42 als Lochbleche oder in anderer geeigneter Weise realisiert werden. Dies entspricht der Lichtauskoppelung des Indirektanteils gemäß der EP 0 846 915 A1, auf die hinsichtlich weiterer Möglichkeiten der Auskopplung des indirekten Lichtanteils und der Gestaltung der Reflektoren 42 verwiesen wird.

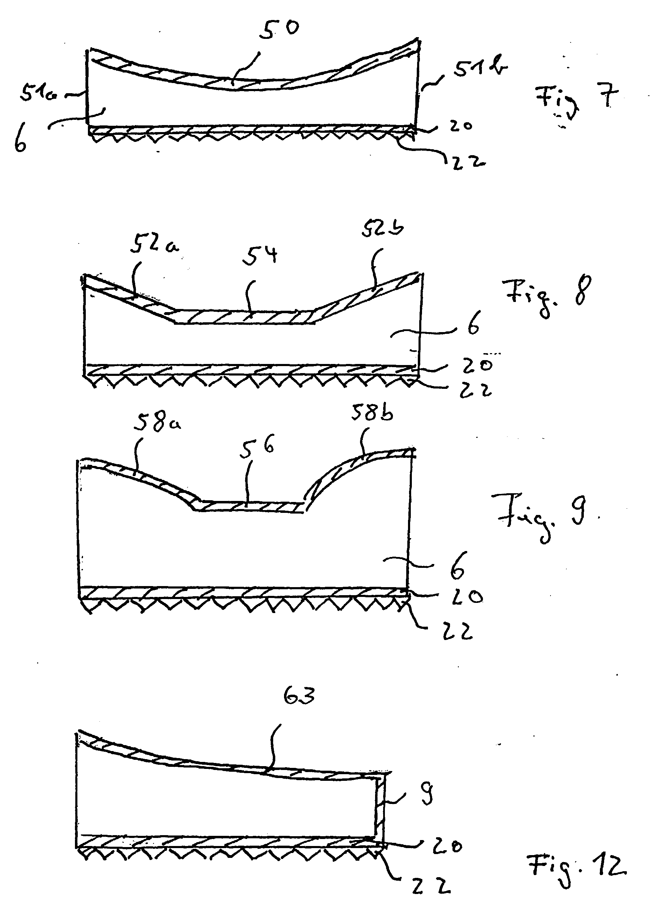

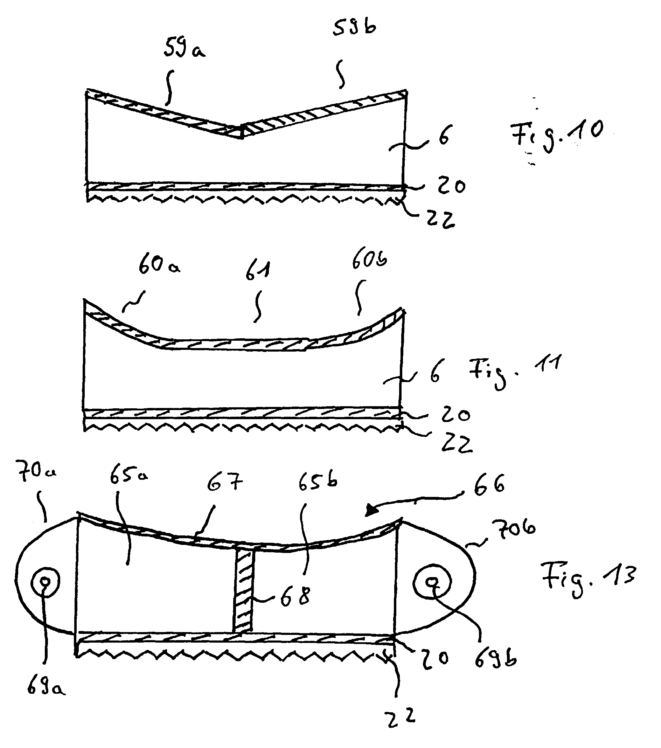

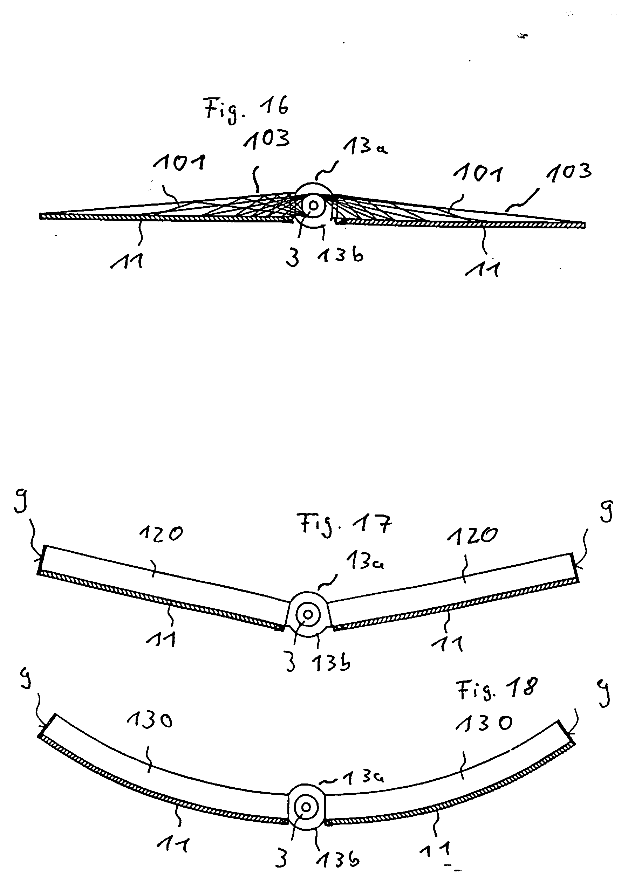

Zur Verbesserung des Leuchtenwirkungsgrades und durch Vergleichmäßigung der Lichtverteilung ist gemäß einer Abwandlung dieser Ausführungsform vorgesehen, daß sich der Hohlraum 6, ausgehend von einer Schmalseite, an der sich eine Lampe 3 oder 40 befindet, verjüngt. Beispiele hierfür sind in den Figuren 7 — 10 dargestellt, wobei die Hohlraumprofile, die in den Figuren 7 — 9 dargestellt sind, sich besonders für eine Ausführungsform eignen, bei der von zwei Seiten in den Hohlraum 6 Licht eingestrahlt wird, wie in Fig. 6 dargestellt, während die Querschnittsform der Fig. 12 für eine einseitige Lichteinstrahlung, wie bei dem Ausführungsbeispiel der Fig. 1, bevorzugt ist. Bei dem Ausführungsbeispiel gemäß Fig. 7 hat die Dachwand 50 eine konkav gekrümmte Form und bildet zwischen den beiden Schmalseiten 51a, 51b eine durchgängig nach innen gewölbte Fläche. Bei der Ausführungsform der Fig. 8 hat die Dachfläche die Form eines Polygonenzugs mit zwei schräg nach innen geneigten Flächen 52a und 52b und einer zentralen waagrechten Fläche 54, die einen minimalen Abstand zu der Lichtauskoppeleinrichtung aufweist. Bei dem Ausführungsbeispiel gemäß Fig. 9 besteht die Dachfläche aus einem waagrechtem Abschnitt 56, welcher den Bereich minimaler Höhe des Hohlraums 6 festlegt, und nach außen und oben geschwungenen Abschnitten 58a und 58b. Fig. 10 zeigt eine Abwandlung der Ausführungsform gemäß Fig. 8. Bei dieser Ausführungsform entfällt die zentrale waagerechte Fläche 54 und die beiden Schrägflächen 59a und 59b schließen unmittelbar aneinander an, so daß sich eine Dreiecksform ergibt. Das Ausführungsbeispiel der Fig. 11 ist ähnlich demjenigen der Fig. 9, wobei jedoch die konvexen Dachabschnitte 58a und 58b durch konkave Dachabschnitte 60a und 60b ersetzt sind, die durch eine waagerechte Fläche 61 miteinander verbunden sind. Durch eine geeignete Wahl der Krümmung eines konkaven Dachabschnitts 50 oder 60a, 60b (Fig. 7 oder 11) oder von konvexen Abschnitten 58a, 58b (Fig. 8), der Breite eines zentralen waagrechten Abschnitts 54, 56 oder 61 (Fig. 7, 8 und 11) und der Neigung vön schräggestellten Dachabschnitten 52a, 52b bzw. 59a, 59b läßt sich die Lichtstärkeverteilungskurve, insbesondere hinsichtlich der Lage und der Stärke der Maxima modellieren. Den Ausführungsformen gemäß Fig. 7 bis 11 ist gemeinsam, daß in der Mitte ein Punkt oder Abschnitt minimaler Höhe liegt, der die Abstrahlung von Licht der Lampen 3 bzw. 40 über die jeweils gegenüberliegende offene Schmalseite 51 begrenzt oder verhindert.

Fig. 12 zeigt eine Querschnittsform, die für eine einseitige Lichteinstrahlung geeignet ist. Hierfür ist die der Lampe 3 gegenüberliegende Schmalseite durch eine reflektierende Wand 9 verschlossen. Insgesamt hat der Hohllichtleiter 5 eine keilförmige, sich zu der Seite 9 hin kontinuierlich verjüngende Struktur. Auch hier kann durch eine geeignete Gestaltung der Dachfläche 63 und des Übergangsbereichs zu der Seitenwand 9 die Lichtstärkeverteilungskurve modelliert werden.

Fig. 13 zeigt eine weitere Ausführungsform einer erfindungsgemäßen Leuchte, bei der zwei Hohllichtleiter 65a und 65b einstückig in einem einzigen Bauteil 66 ausgebildet sind. Dieses Bauteil weist eine konkav gekrümmte Dachfläche 67 auf, welche den Prismenplatten 20 und 22, ähnlich wie bei dem Hohllichtleiter gemäß Fig. 7, gegenübersteht, wobei jedoch der Raumbereich zwischen der Dachfläche und den Prismenplatten 20 und 22 durch eine Trennwand 68 in die besagten zwei Hohllichtleiter 65a und 65b unterteilt ist. Jedem der beiden Hohllichtleiter 65a und 65b ist eine Lampe 69a bzw. 69b mit einem dazugehörigen Reflektor 70a bzw. 70b zugeordnet, welche, wie vorangehend beschrieben, jeweils Licht über eine Schmalseite in den jeweiligen Hohllichtleiter einkoppelt. Diese Ausführungsform dupliziert also gewissermaßen eine Leuchte mit einem Hohllichtleiter gemäß Fig. 12. Selbstverständlich kann eine Trennwand ähnlich wie Trennwand 68 auch bei den anderen Ausführungsformen der erfindungsgemäß vorgesehenen Hohllichtleiter gemäß Fig. 7 bis 11 eingesetzt werden bzw. diese Ausführungsformen könnten dahingehend modifiziert werden, daß der Hohllichtleiter gewissermaßen nur die Hälfte eines Hohllichtleiters gemäß Fig. 7 bis 11 darstellt und an dem von der Lampe abgewandten Ende durch eine Abschlußwand verschlossen ist, ähnlich wie dies im Verhältnis zwischen Fig. 7 und Fig. 12 der Fall ist. Während bei der in Fig. 13 dargestellten Ausführungsform der erfindungsgemäßen Leuchte nur ein einziger Körper 66 mit zwei Hohllichtleitern 65a und 65b zwischen zwei Lampen angeordnet ist, die somit an den Außenseiten der Leuchte liegen, kann erfindungsgemäß auch vorgesehen sein, ähnlich wie bei der Ausführungsform gemäß Fig. 6 zwei derartige Körper nebeneinander anzuordnen und sowohl an den Außenseiten als auch an der Schmalseite zwischen den Körpern 66 jeweils eine oder mehrere Lampen, entsprechend den Lampen 3 und 40 in Fig. 6, vorzusehen.

Fig. 14 zeigt beispielhaft eine Abwandlung der Ausführungsform gemäß Fig. 8, bei der die geneigten Abschnitte 72a, 72b vollständig diffus oder spiegelnd reflektierend ausgebildet sind und der waagerechte zentrale Abschnitt mit einer lichtauskoppelnden Prismenstruktur 74 versehen ist, uni einen Teil des Lichts in dem Hohlraum 6 als indirekten Lichtanteil nach oben auszukoppeln. Dieses Beispiel illustriert auch, wie man den Indirektanteil, der aus dem Hohlraum 6 augekoppelt wird, dadurch kontrollieren kann, daß man Abschnitte mit unterschiedlichen Reflexions- bzw. Transmissionseigenschaften vorsieht.

Die Ausführungsformen der erfindungsgemäßen Leuchte gemäß den. Figuren 15 bis 19 entsprechen in der EP 0 846 915 A1 vorgeschlagenen Ausführungsformen der dort beschriebenen Innenraumleuchte, mit dem Unterschied, daß die Lichtauskoppeleinrichtung 5 durch zwei Platten mit linienförmigen Prismenstrukturen, wie vorangehend beschrieben, anstatt mit punktförmigen Prismen gebildet wird und bei den dargestellten Ausführungsformen anstelle eines massiven Lichtleiters, wie in der EP 0 846 915 A1 vorgeschlagen, ein Hohllichtleiter verwendet wird. Daher werden diese Ausführungsformen nachfolgend nur kurz beschrieben. Hinsichtlich weiterer Einzelheiten wird auf die EP 0 846 915 A1 verwiesen.

Fig. 15 zeigt eine Abwandlung der Ausführungsform der Fig. 1, bei der jedem Hohllichtleiter 5 eine Lampe 3' zugeordnet ist, die ausschließlich in den ihr zugeordneten Hohllichtleiter Licht einkoppelt. Die Lampen 3' sind von Reflektoren 42' umgeben, welche entsprechend den Reflektoren 42 des Ausführungsbeispiels der Fig. 6 ausgebildet sind und einen Teil des Lichts der Lampen 3' direkt nach oben an dem Hohllichtleiter 5 vorbei als Indirektanteil auskoppeln.

Bei der Ausführungsform gemäß Fig. 16 haben die Hohllichtleiter 101 eine dreieckige Keilform mit einer geraden Dachfläche 103 und einer Lichtauskoppeleinrichtung 5, die aus ebenen strukturierten Platten wie vorangehend beschrieben besteht.

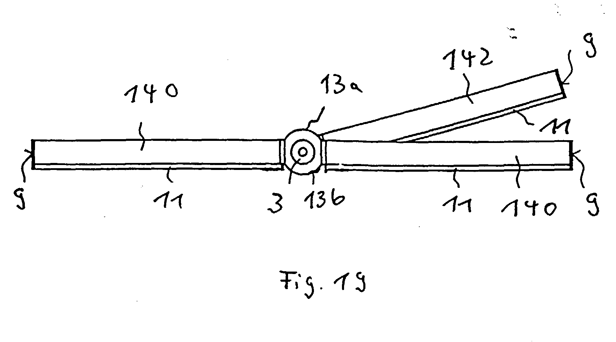

Gemäß dem Ausführungsbeispiel der Fig. 17 sind die Hohllichtleiter 120 schräg zu der Vertikalen angestellt und sind vorzugsweise um eine Achse parallel zur Lampenachse verschwenkbar angeordnet.

Gemäß dem Ausführungsbeispiel der Fig. 18 sind die Hohllichtleiter 130 nach oben und außen gewölbt ausgebildet.

Bei der Ausführungsform gemäß Fig. 19 sind in der Richtung der Lampenachse hintereinander mehrere Hohllichtleiter 140, 142 angeordnet, die unabhängig voneinander zu der Vertikalen in einem Winkel angestellt werden können. Es kann auch vorgesehen sein, daß nur einer oder ein Teil der Hohllichtleiter, beispielsweise die mittleren Hohllichtleiter 142 angestellt werden können. Ebenso kann vorgesehen sein, daß die verschiedenen Hohllichtleiter 140, 142 zwar nicht verstellbar, aber mit festen unterschiedlichen Anstellwinkeln angeordnet sind.

Es versteht sich von selbst, daß verschiedene Elemente der vorangehend skizzierten Ausführungsformen der erfindungsgemäßen Innenleuchte miteinander kombiniert werden können, beispielsweise eine schwenkbare Anordnung eines Hohllichtleiters und eine gekrümmte Ausbildung des Hohllichtleiters. Während bei den vorangehend beschriebenen Ausführungsbeispielen der Lichtleiter ein Hohllichtleiter war, was die bevorzugte Ausführungsform bildet, kann grundsätzlich auch anstelle eines Hohllichtleiters ein massiver Lichtleiter verwendet werden. Anstelle von Platten mit einer lichtbrechenden Struktur können auch entsprechend strukturierte Folien verwendet werden.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

| | |
|---|---|
| 1 | Leuchte |
| 3 | Lampe |
| 3' | Lampe |
| 5 | Hohllichtleiter |
| 6 | Hohlraum |
| 7 | Dachfläche |
| 9 | Seitenwand |
| 11 | Lichtauskoppeleinrichtung |
| 13a, 13b | Reflektor |
| 20 | Platte |
| 22 | Platte |
| 24, 24a, 24b | Prismen |
| 26, 26a, 26b | Prismen |
| 28, 28a, 28b | Vertiefung |
| 30, 30a, 30b | Vertiefung |
| 40 | Lampe |
| 42 | Reflektor |
| 42' | Reflektor, |
| 50 | Dachwand |
| 51a, 51b | Schmalseiten, |
| 52a, 52b | Schrägfläche |
| 54 | waagrechte Fläche |
| 56 | waagrechte Fläche |
| 58a, 58b | konvexer Abschnitt |
| 59a, 59b | geneigte Dachfläche |
| 60a, 60b | konkave Dachabschnitte |
| 61 | waagrechte Fläche |
| 63 | Dachfläche |
| 65a, 65b | Hohllichtleiter |
| 66 | Körper |
| 67 | Dachfläche |
| 68 | Trennwand |
| 69a, 69b | Lampe |
| 70a, 70b | Reflektor |
| 72a, 72b | geneigte Dachabschnitte |
| 74 | Prismenstruktur |
| 101 | Hohllichtleiter |
| 103 | Dachfläche |
| 120 | Hohllichtleiter |
| 130 | Hohllichtleiter |
| 140 | Hohllichtleiter |
| 142 | Hohllichtleiter |

**Patentansprüche**

1. Leuchte mit mindestens zwei nebeneinander angeordneten Lichtleitern (5) mit einer eine Lichtaustrittsfläche aufweisenden Unterseite, einer oder mehreren Lampen (3; 40; 3'), wobei zumindest an einer zu der Unterseite nicht parallelen Seitenfläche jedes der Lichtleiter zumindest eine Lampe derart angeordnet ist, daß Licht der Lampe bzw. Lampen (3; 40; 3') über die besagten Seitenflächen der Lichtleiter in diese eingekoppelt wird, sowie mit einer Lichtauskoppeleinrichtung (11) zum Auskoppeln von Licht aus den Lichtleitern (5) zum Austritt über die besagte Lichtaustrittsfläche, dadurch gekennzeichnet, daß die Lichtauskoppeleinrichtung (11) in dem Lichtweg des aus der Lichtaustrittsfläche austretenden Lichts eine Grenzfläche zwischen zwei Medien mit unterschiedlichen Brechungsindizes aufweist, die mit einer lichtbrechenden Struktur versehen ist, die zumindest abschnittsweise entsprechend einem Linienmuster (28, 30) aus einer oder mehreren Linien ausgebildet ist, dessen Linie oder Linien (28, 30) einen oder mehrere längliche lichtbrechende Abschnitte (24a, 24b; 26a, 26b) auf einander gegenüberliegenden Seiten begrenzen, deren bzw. dessen Breite in der Richtung senkrecht zu den Linien kleiner als deren Länge in Richtung der Linien ist, wobei die lichtbrechende Struktur, bezogen auf eine Fläche senkrecht zu der oder den Linien, eine Abschirmung des aus der Grenzfläche austretenden Lichts oberhalb eines Grenzwinkels bezüglich einer Normalen zu der Grenzfläche erzeugt.

2. Leuchte nach Anspruch 1, dadurch gekennzeichnet, daß die Lichtauskoppeleinrichtung an einer zweiten Grenzfläche zwischen zwei Medien mit unterschiedlichen Brechungsindizes, die in dem Lichtweg des aus der Lichtaustrittsfläche austretenden Lichts nach der ersten Grenzfläche liegt, eine zweite lichtbrechende Struktur aufweist, die zumindest abschnittsweise entsprechend einem Linienmuster aus einer oder mehreren Linien ausgebildet ist, dessen Linie oder Linien (30) einen oder mehrere längliche lichtbrechende Abschnitte (26a, 26b) auf einander gegenüberliegenden Seiten begrenzen, deren Breite in der Richtung senkrecht zu den Linien kleiner als deren Länge in Richtung der Linien ist, wobei die zweite Struktur, bezogen auf eine Fläche senkrecht zu der oder den Linien, eine Abschirmung des aus der zweiten Grenzfläche austretenden Lichts oberhalb eines Grenzwinkels bezüglich einer Normalen zu der zweiten Grenzfläche erzeugt, wobei die Linien der zweiten Struktur relativ zu den Linien der ersten Struktur so angeordnet sind, daß das aus der Lichtaustrittsfläche der Leuchte austretende Licht zumindest in zwei nicht parallelen Ebenen senkrecht zu der Lichtaustrittsfläche jeweils oberhalb eines Grenzwinkels bezüglich einer Normalen zu der Lichtaustrittsfläche abgeschirmt wird.

3. Leuchte nach Anspruch 1 oder 2, dadurch gekennzeichnet, daß die lichtlenkenden Abschnitte (24, 26) zwischen linienförmigen Vertiefungen der ersten und/oder zweiten Struktur ausgebildet und in Richtung der Linien im wesentlichen gleichförmig sind.

4. Leuchte nach einem der Ansprüche 1 bis 3, dadurch gekennzeichnet, daß die lichtlenkenden Abschnitte Prismen (24,26) sind.

5. Leuchte nach Anspruch 4, dadurch gekennzeichnet, daß die erste und/oder zweite Struktur entsprechend einem Muster von geraden parallelen kreuzungsfreien Linien (28a, 28b, 30a, 30b) aufgebaut ist, zwischen denen sich Prismen (24a, 24b, 26a, 26b) als lichtbrechende Abschnitte befinden, deren Querschnittsprofil im wesentlichen translationsinvariant bezüglich der Richtung der Linien ist.

6. Leuchte nach Anspruch 4 oder 5, dadurch gekennzeichnet, daß eines der beiden Medien an der ersten und/oder zweiten Grenzfläche Luft ist, die Prismen (24, 26) eine im wesentlichen symmetrische Prismenkante aufweisen und der Prismenwinkel w die folgenden Relationen erfüllt:

$$w/2 \leq C$$

$$w \geq 2\,(2\arcsin(1/n) + 90)/3$$

$$\tan(w/2) \leq (n\sin(\arcsin(1/n) - 3\,w/2) + \cos(w/2)) / (n\cos(\arcsin(1/n) - 3\,w/2) - \sin(w/2)),$$

wobei n der Brechungsindex des zweiten Mediums an der Grenfläche und C der Abschirmwinkel der Lichtstärkeverteilung an der Grenzfläche ist.

7. Leuchte nach einem der Ansprüche 2 bis 6, dadurch gekennzeichnet, daß die erste und zweite Struktur an zwei einander gegenüberliegenden Seiten einer liehtbrechenden Platte ausgebildet sind.

8. Leuchte nach einem der Ansprüche 2 bis 7, dadurch gekennzeichnet, daß die Lichtauskoppeleinrichtung zwei oder mehr geschichtete plattenförmige Elemente (20, 22) aufweist, deren Grundflächen parallel zueinander angeordnet sind, wobei die erste Struktur in einer Grundfläche eines ersten plattenförmigen Elements und die zweite Struktur in einer Grundfläche eines zweiten plattenförmigen Elements ausgebildet ist.

9. Leuchte nach Anspruch 8, dadurch gekennzeichnet, daß die Grundflächen des ersten und zweiten plattenförmigen Elements, an denen die erste bzw. zweite Struktur ausgebildet ist, in die gleiche Richtung weisen.

**10.** Leuchte nach einem der Ansprüche 1 bis 9, dadurch gekennzeichnet, daß eine oder mehrere Lampen in einem Raumbereich zwischen zwei Lichtleitern angeordnet sind, welche jeweils Licht in einen oder beide Lichtleiter einkoppeln.

**11.** Leuchte nach einem der Ansprüche 1 bis 10, gekennzeichnet durch einen einer oder mehreren Lampen zugeordneten Reflektor (42, 42'), welcher Licht der Lampe bzw. der Lampen teilweise zu einer Seitenfläche eines Lichtleiters hin zum Einkoppeln in den Lichtleiter (5) reflektiert und teilweise an dem Lichtleiter (5) vorbei nach oben zur Erzeugung eines indirekten Lichtanteils der Leuchte abgibt.

**12.** Leuchte nach einem der Ansprüche 1 bis 11, dadurch gekennzeichnet, daß zumindest einer der Lichtleiter ein Hohllichtleiter (5) ist, der durch ein Gehäuse mit einem Hohlraum (6) mit reflektierenden Wänden festgelegt ist, der an einer Schmalseite zum Einkoppeln von Licht von einer oder mehreren der Lampen eingerichtet ist, an einer Seite zumindest teilweise durch die Lichtauskoppeleinrichtung (11) begrenzt ist und eine der Lichtauskoppeleinrichtung (11) gegenüberliegende Dachfläche (7) aufweist, die nach innen hin zumindest teilweise reflektierend ist.

**13.** Leuchte nach Anspruch 12, dadurch gekennzeichnet, daß der Hohllichtleiter (5) zu der oder den Lampen hin offen ist, so daß Licht von den Lampen (3, 40) direkt in den Hohlraum (6) gelangen kann.

**14.** Leuchte nach Anspruch 12 oder 13, dadurch gekennzeichnet, daß die Dachfläche (7) teilweise Licht aus dem Hohlraum (6) in die zu der Lichtaustrittsfläche entgegengesetzte Richtung zur Abgabe eines indirekten Lichtanteils auskoppelt.

**15.** Leuchte nach Anspruch 14, dadurch gekennzeichnet, daß zumindest ein reflektierender Abschnitt der Dachfläche (7) teilweise transparent ist.

**16.** Leuchte nach Anspruch 14 oder 15, dadurch gekennzeichnet, daß die Dachfläche (7) ganz oder teilweise als halbdurchlässiger Spiegel ausgebildet ist.

**17.** Leuchte nach einem der Ansprüche 14 bis 16, dadurch gekennzeichnet, daß die Dachfläche eine lichtbrechende Struktur (64) zum Auskoppeln von Licht in die der Lichtaustrittsfläche entgegengesetzte Richtung aufweist.

**18.** Leuchte nach einem der Ansprüche 14 bis 17, dadurch gekennzeichnet, daß die Dachfläche (7) abschnittsweise aus einem klaren Material besteht.

**19.** Leuchte nach einem der Ansprüche 14 bis 18, dadurch gekennzeichnet, daß die Dachfläche (7) abschnittsweise aus einem vollständig oder überwiegend reflektierenden Material besteht.

**20.** Leuchte nach einem der Ansprüche 12 bis 19, dadurch gekennzeichnet, daß die Dachfläche (7) ganz oder abschnittsweise diffus reflektierend ausgebildet ist.

**21.** Leuchte nach einem der Ansprüche 12 bis 20, dadurch gekennzeichnet, daß die Höhe des Hohlraums (6) in einem Schnitt senkrecht zu der Lampenachse einer dem Lichtleiter (5) zugeordneten Lampe (3, 40) sich zumindest in einem Teilabschnitt in der Richtung weg von dieser Lampe (3, 40) verringert.

**22.** Leuchte nach Anspruch 21, dadurch gekennzeichnet, daß die Höhe des Hohlraums, ausgehend von der einer Lampe (3) zugewandten Schmalseite (51a) sich in der Richtung von dieser Schmalseite weg zu einer gegenüberliegenden Schmalseite (51b; 9) hin monoton verringert.

**23.** Leuchte nach Anspruch 22, dadurch gekennzeichnet, daß die gegenüberliegende Schmalseite (9) reflektierend ausgebildet ist.

**24.** Leuchte nach Anspruch 20, dadurch gekennzeichnet, daß die Höhe des Hohlraums, ausgehend von einer Schmalseite (51a) in Richtung zu der gegenüberliegenden Schmalseite hin in einem ersten Teilabschnitt (52a; 58a) abnimmt und danach in einem zweiten Teilabschnitt (52b; 58b) zunimmt.

**25.** Leuchte nach Anspruch 24, gekennzeichnet durch einen Bereich (54; 56) des Hohlraums (6) mit im wesentlichen konstanter minimaler Höhe zwischen den beiden Schmalseiten.

**26.** Leuchte nach Anspruch 25, dadurch gekennzeichnet daß die Dachfläche und/oder die ihr gegenüberliegende Fläche im Querschnitt die Form eines Polygonzugs aufweist.

**27.** Leuchte nach einem der Ansprüche 24 bis 26, dadurch gekennzeichnet, daß die Dachfläche und/oder die ihr gegenüberliegende Fläche im Querschnitt konvex gekrümmte Teilabschnitte (58a, 58b) aufweist.

**28.** Leuchte nach einem der Ansprüche 24 bis 27, dadurch gekennzeichnet, daß die Dachfläche (50) und/oder die ihr gegenüberliegende Fläche im Querschnitt ganz oder teilweise konkav gekrümmt ausgebildet ist.

**29.** Leuchte nach einem der Ansprüche 24 bis 28, dadurch gekennzeichnet, daß in der Nähe von zwei einander gegenüberliegenden Schmalseiten (51a, 51b) jeweils eine oder mehrere Lampen (3, 40) angeordnet sind, welche über diese Schmalseite Licht in den Hohlraum einkoppeln.

**30.** Leuchte nach Anspruch 29 dadurch gekennzeichnet, daß die Höhe des Hohlraums in einem Bereich (54, 56) zwischen den Lampen (3, 40) soweit verringert ist, daß eine Direkteinstrahlung einer Lampe (3) auf den Lichteinkoppelbereich einer gegenüberliegenden Lampe (40) verhindert oder zumindest reduziert wird.

FIG 1

1

7

9

13a

5    11    3    13b    5    11    9

7

FIG 2

6    7    13a    6    S₄

7    S₃

9    11    13b    3    S₁    S₂    11

5    5    9

5

Fig. 3

Fig. 4

Fig. 5

Fig. 6

7    13a  5    7

42  40  11    5    3
13b

11  40  42

5    5

9    42' 3'  42'  11    9
11

Fig. 15

72a    74    72b

6

20
22    Fig. 14

Fig 7

Fig. 8

Fig. 9

Fig. 12

59a  59b

Fig. 10

6

20

22

60a  61  60b

6  Fig. 11

20

22

70a  65a  67  65b  66

70b

68  Fig. 13

69a  20  69b

22

Fig. 16

101   103   13a   101   103

11   3 13b   11

Fig. 17

9   120   13a   120   9

11   3 13b   11

9   Fig. 18   9

130   130

13a

11   3 13b   11

Fig. 19

**Europäisches Patentamt**

# EUROPÄISCHER RECHERCHENBERICHT

Nummer der Anmeldung

EP 99 11 0141

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,Y | EP 0 846 915 A (SIEMENS BELEUCHTUNGSTECHNIK) 10. Juni 1998 (1998-06-10) * Zusammenfassung; Abbildungen 1-13 * | 1-5, 7-13, 19-25,29 | F21V8/00 F21V5/02 |
| Y | EP 0 819 970 A (NITTO JUSHI KOGYO) 21. Januar 1998 (1998-01-21) * Zusammenfassung; Abbildungen 1-19 * | 1-5, 7-13, 19-25,29 | |
| Y | US 5 046 805 A (J.H.SIMON) 10. September 1991 (1991-09-10) * Spalte 5, Zeile 58 - Spalte 6, Zeile 17; Abbildungen 1-12 * | 12,13, 21-25,29 | |
| Y | US 5 863 114 A (S.NAGATANI ET AL.) 26. Januar 1999 (1999-01-26) * Spalte 3 - Spalte 8; Abbildungen 1-23 * | 12,13, 21-25,29 | |

**RECHERCHIERTE SACHGEBIETE (Int.Cl.7)**

F21V

Der vorliegende Recherchenbericht wurde für alle Patentansprüche erstellt

| Recherchenort | Abschlußdatum der Recherche | Prüfer |
|---|---|---|
| DEN HAAG | 19. November 1999 | Malic, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

EP 99 11 0141

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-11-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 0846915 | A | 10-06-1998 | KEINE | | |
| EP 0819970 | A | 21-01-1998 | US | 5914759 A | 22-06-1999 |
| | | | WO | 9729398 A | 14-08-1997 |
| US 5046805 | A | 10-09-1991 | AU | 8298591 A | 18-02-1992 |
| | | | EP | 0539496 A | 05-05-1993 |
| | | | WO | 9201960 A | 06-02-1992 |
| US 5863114 | A | 26-01-1999 | JP | 6258641 A | 16-09-1994 |

EPO FORM P0461

Für nähere Einzelheiten zu diesem Anhang : siehe Amtsblatt des Europäischen Patentamts, Nr.12/82